# EUROPEAN PATENT SPECIFICATION

(11) **EP 2 874 484 B1**
(45) Date of publication and mention of the grant of the patent: **02.03.2016**
(21) Application number: 13818428.8
(22) Date of filing: 02.12.2013
(51) Int. Cl.: A01D 34/416

(54) **WEED-MOWER HEAD**
UNKRAUTMÄHERKOPF
TÊTE DE DÉSHERBAGE

(30) Priority: 30.11.2012 IT VI20120325
(43) Date of publication of application: 27.05.2015
(73) Proprietor: BERTI Macchine Agricole S.P.A., 37042 Caldiero VR (IT)
(72) Inventor: TRABACCHIN, Fabio, I-37042 Caldiero (VR) (IT)
(74) Representative: Autuori, Angelo
(86) International application number: PCT/IB2013/060560
(87) International publication number: WO 2014/083550

(56) References cited:
- EP-A1- 1 101 396
- US-A- 4 077 190
- US-A- 4 476 632
- US-A1- 2010 223 897

## Description

### Field of the invention

The present invention is generally applicable in the technical field of the agricultural machines, and particularly relates to a weed-mower head applicable to a vehicle for weeding the areas on the edges of a forwarding surface thereof. For example, such a forwarding surface may be bounded by boundary elements against which the weed-mower head is susceptible to impact.

In a further aspect, the invention further relates to a weed-mower apparatus applicable to a vehicle for cleaning rows of plants, for example vineyards or orchards, the apparatus including the above mentioned weed-mower head.

In a further aspect, the invention further relates to a method for cleaning rows of plants by using the above mentioned weed-mower apparatus.

### Prior art

Weed-mower heads are generally known that include a rotary shaft for supporting a plurality of working wires susceptible to be arranged radially with respect to the shaft upon rotation thereof.

Coaxially to the shaft and integrally thereto a tubular element for protecting the wires is disposed, which wires, that are wound around the shaft, protrude outward through the same tubular element. The wires are inserted in the shaft through a transverse hole passing therethrough. An example of such weed-mower heads is known from EP2092816.

An apparent drawback of such known weed-mower heads is that the replacement or the extension of a wire is time-consuming and difficult. In fact, in case of breaking or elongation of a wire, at first the elongation of all the wires in needed, then the removal of the broken wire, the insertion of the new wire and finally the rewinding of all the wires.

Further, in this way it is extremely difficult to obtain at the end of the above operation wires having equal length. Therefore, the weeding may be inhomogeneous.

The above sequence of actions has to be carried out further upon the mounting of the weed-mower head, or in order to adjust the length of the wires. In fact, because of the above mentioned differences in length of the wires, it is necessary to frequently stop the work to elongate the wires which are more worn.

This apparent drawback further limits the efficiency of the known weed-mower heads, both because of the mounting and maintenance difficulty a low number of working wires is employed and because the above operations require time and effort.

The low cleaning efficiency further influences the high cost of the cleaning process itself.

Another drawback of the known weed-mower heads is the poor versatility in terms of use, due to the predetermined and fixed size of the tubular element from which the wires extends.

From US4476632 a weed-mower head to be connected to a lawn mower or a trimmer is known, while EP-A1-1 101 396 discloses a weed-mower as in the preamble of claim 1.

### Summary of the invention

It is an object of the present invention to at least partially overcome the above mentioned drawbacks, by providing a weed-mower head that is highly effective and relatively low cost.

Another object of the present invention is to provide a weed-mower head that allows a rapid and easy replacement and/or maintenance of the working wires.

Another object of the present invention is to provide a weed-mower which allows a rapid and efficient cleaning of rows of plants.

Another object is to provide a weed-mower head which allows a great versatility in terms of use.

These and other objects, as better explained hereafter, are fulfilled by a weed-mower head having the features of claim 1.

The weed-mower head may be advantageously connectable to a vehicle for weeding the areas on the edges of a forwarding surface thereof. For example, such a forwarding surface may be bounded by boundary elements, such as the beds of a highway bounded by guardrails or the edges of a roadway bounded by milestones and/or supporting columns for retroreflectors.

During use, the vehicle advances preferably in a continuous manner along the forwarding surface, while the head moves parallel to the forwarding surface by periodically impacting against the boundary elements. In practice, the weed-mower head acts in the area interposed between two consecutive boundary elements and/or in the area surrounding each boundary element.

In a preferred, but not exclusive embodiment of the invention, the weed-mower head may be connected to an agricultural vehicle such as a tractor or the like, either directly on the vehicle at the front and/or rear and/or side (that is, interposed between the axles of the vehicle) part thereof or connected to other accessories mounted on the vehicle, for example a shredder.

In a further aspect, a weed-mower apparatus for cleaning rows of plants that includes the above weed-mower head may be provided.

Advantageous embodiments of the invention are defined according to the dependent claims.

### Brief description of the drawings

Further features and advantages of the invention will appear more evident upon reading the detailed description of some preferred, non-exclusive embodiments of the weed-mower head **1**, which are described as non limiting example with the help of the annexed drawings, in which:
**FIG. 1a** is an isometric view of an embodiment of the weed-mower head **1**, with all modules **30** engaged to each other to form the substantially unitary tubular body **40**, the latter being mutually coupled with the shaft **10**;
**FIGs. 1b** and **1c** are further isometric views of the weed-mower head **1**;
**FIGs. 2a** and **2b** are isometric views of an agricultural vehicle **V** on which respectively a single weed-mower head **1** and one pair of weed-mower heads **1, 1'** by means of the frame **T** are mounted;
**FIG. 3** is an isometric view of an agricultural vehicle **V** on which both a shredder **W** and a weed-mower head **1** are mounted;
**FIGs. 4** to **7** are isometric views of a mounting sequence of a first embodiment of a module **30** on the shaft **10**;
**FIGs. 8** and **9** are isometric views of an mounting sequence of a working wire **20** on the embodiment of the module **30** of FIGs. 4-7, with in **FIGs. 8a and 8b** some enlarged details;
**FIG. 10** is an isometric view of two mutually engaged modules **30**, the latter being the embodiment of the module **30** of FIGs. 4-7;
**FIG. 11** is an isometric view of some details of a weed-mower head **1** in which one of the modules **30** has been disengaged from the other to allow access thereto by a user, for example to elongate or replace a broken working wire **20**;
**FIGs. 12a** and **12b** are isometric views of a weed-mower head 1 in which all the modules **30** are mutually engaged to form the substantially unitary tubular body **40**, the latter being mutually decoupled from the shaft **10**;
**FIG. 13** is an isometric view of a weed-mower head **1** in which all the modules **30** are mutually engaged to form the substantially unitary tubular body **40**, the latter being mutually coupled with the shaft **10** by means of the axial locking means **50**;
**FIG. 14** is an exploded axonometric view of a second embodiment of a module **30**;
**FIGs.** from **15a** to **15c** are isometric views of a mounting sequence of a working wire 20 on the embodiment of the module **30** of FIG. 14;
**FIG. 16** is an exploded axonometric view of a third embodiment of a module **30.**

### Detailed description of some preferred embodiments

With reference to the above cited figures, the weed-mower head **1** is applicable to a vehicle **V** to weed areas **B, B'** on the edges of a forwarding surface **R.** The latter may be bounded by boundary elements **F, F'**, such as beds of a highway which is bounded by guardrails or the edges of a roadway bounded by milestones and/or supporting columns for retroreflectors.

In this document, the term "forwarding surface of a vehicle" and the like indicates one or more surfaces, of any kind with the exception of a stretch of water, suitable to allow the forwarding along them of any kind of vehicle. In particular, the forwarding surface may be paved or not.

In the present description is described, as a not limitative example of the invention, a weed-mower head **1** mounted on an agricultural vehicle **V**, for example a tractor, for cleaning rows of plants **F, F'**, for example vineyards or orchards. In this case, the forwarding surface **R** is defined by the surface to the right and/or left of the row **F** in the case of single row, or interposed between two rows **F, F'**. The areas to weed **B, B'** include, in particular, the surfaces interposed between two consecutive poles of the row and/or the areas surrounding each pole of the row.

It is understood that the weed-mower head **1** can be mounted on any vehicle **V**, may advance along a any forwarding surface **R**, which may be bounded by any type of boundary elements **F, F'**, without departing from the scope of protection of the appended claims.

The present invention includes various similar or equal parts and/or elements. Where not otherwise specified, the similar or equal parts and/or elements are indicated by a single reference number, meaning that the technical features described are common to all the similar or identical parts and/or elements.

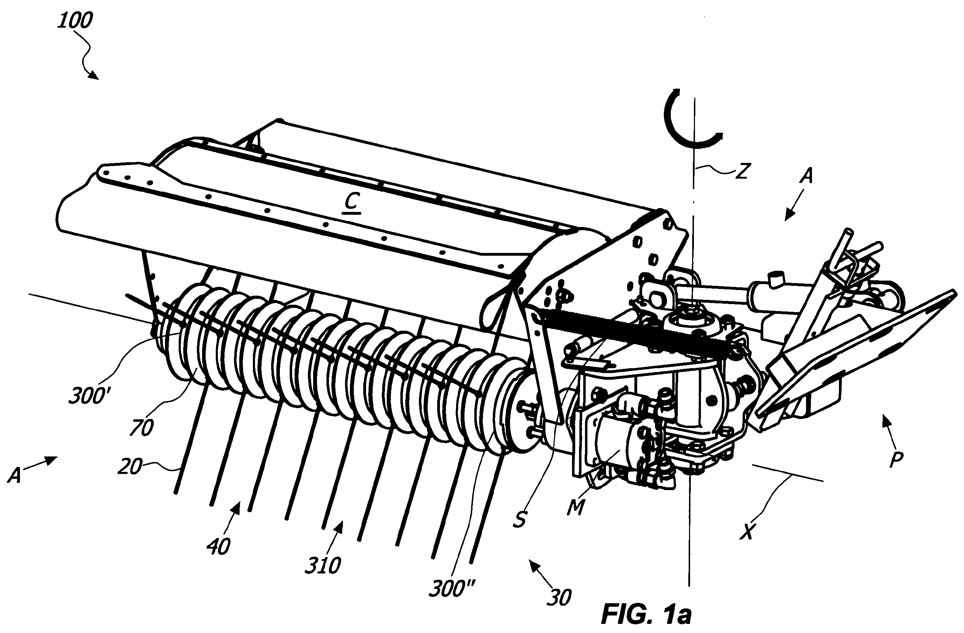

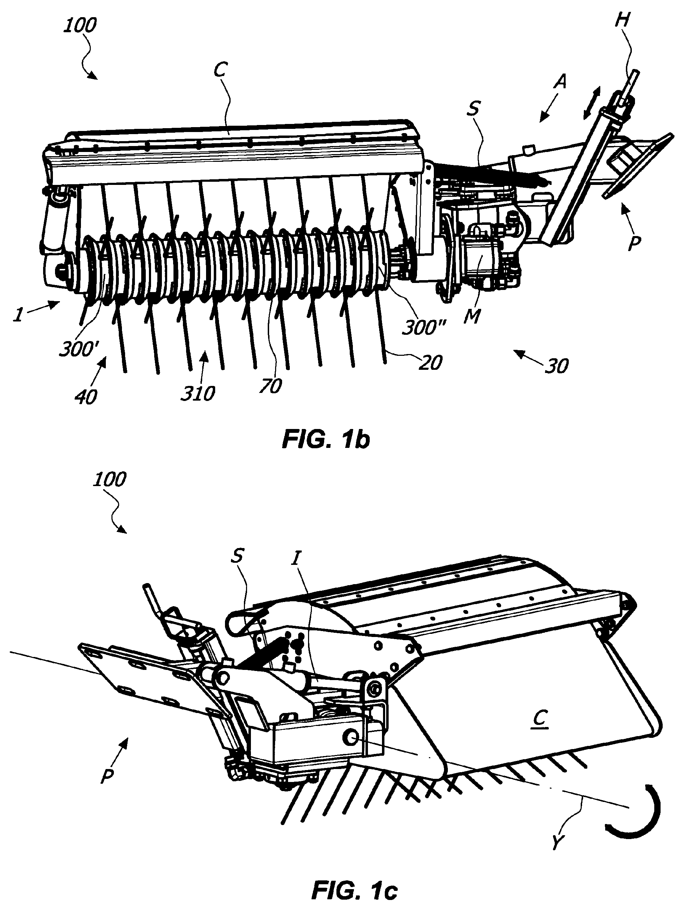

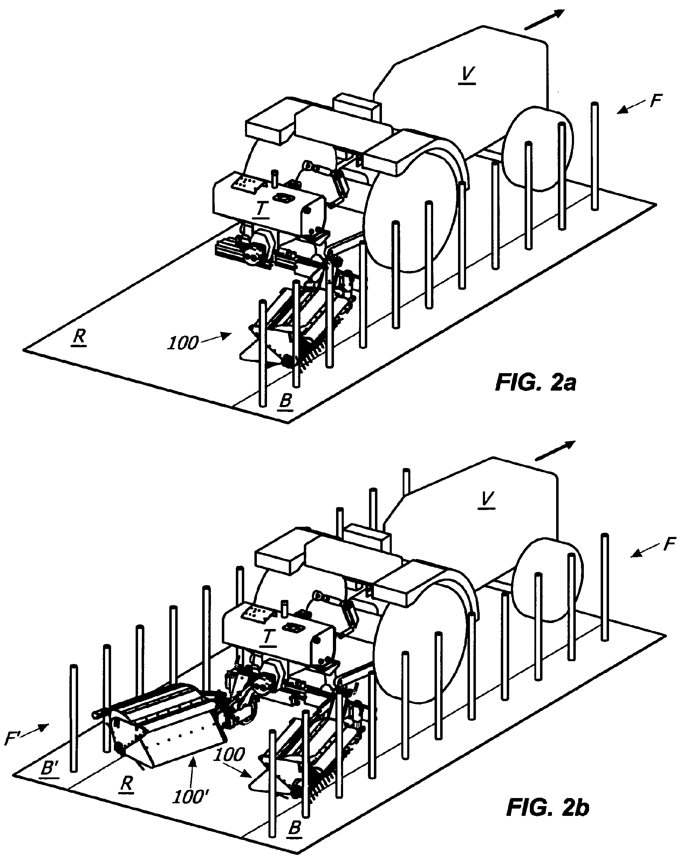

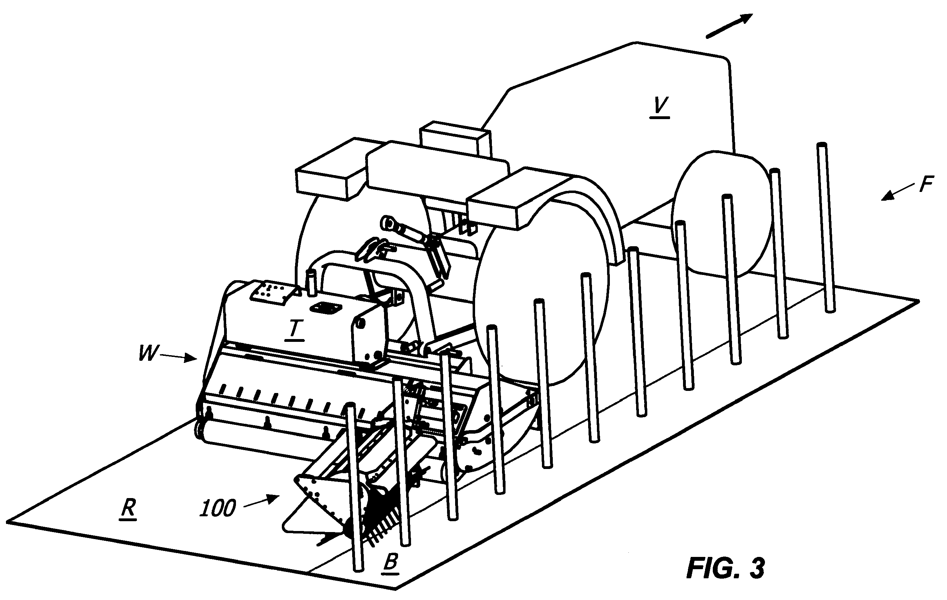

As shown in Figures 1a, 1b and 1c, the weed-mower head **1** may be an integral part of a weed-mower apparatus **100** for cleaning rows of plants **F, F'**. The apparatus **100** may include a support structure to be connected, for example through a plate **P**, to an agricultural vehicle **V** such as a tractor or the like, which support structure may in turn be connected to a frame **T**, as shown in FIGS. 2a, 2b and 3.

The support structure may include, in addition to the weed-mower head **1**, a protective carter **C** and motor means, for example a hydraulic motor **M**, which function will be clarified in the following.

The support structure may further include adjustment means **A** to adjust the position of the head **1** before and/or during use.

Advantageously, the head **1** can be pivoted on the support structure to rotate around the axis **Z**, which may be substantially vertical, upon the impact against an obstacle, such as a pole of the row **F**. The spring **S** can ensure the mechanical return of the head **1** from the rotated position which it assumes as a result of the impact to the predetermined working position.

Figure **1b** shows another possibility of movement of the head **1**. By turning the lever **H**, the operator can move the head 1 in the depicted direction, thus adjusting the height thereof from the ground.

Figure **1c** shows a further possibility of movement of the head **1**. In fact, the piston **I** rotates the head **1** around the axis **Y**, thus simplifying the movement on the road of the head **1**.

In a way *per se* known manner, the carter **C** can be pivoted on the support structure to rotate about the axis **X**, and may be lockable in the desired position.

In a first embodiment, shown in Figures 2a and 2b, the weed-mower apparatus **100** may be connected directly to the agricultural vehicle **V**, for example by means of an appropriate frame **T**.

In a second embodiment, shown in Figure 3, the weed-mower apparatus **100** may be connected indirectly to the agricultural vehicle **V**, for example by connection to a shredding machine **W** which is in turn connected to the vehicle **V**. Suitably, the shredding machine **W** can be of a *per se* known type, for example the one of the type TFB/Y or AF or TFB/M marketed by Berti Macchine Agricole SpA.

The weed-mower head **1** may include a support shaft **10** preferably made of metallic material, e.g. steel, which shaft **10** defines a longitudinal axis **X.** The weed-mower head **1** may further include a plurality of working wires **20** preferably made of polymeric material, for example polyamide, and a set of disc-shaped modules, indicated as a whole by the number **30**, coaxially coupled with the shaft **10**. Suitably, the modules **30** may be at least partially made of polymeric material.

Suitably, each module **30** may contain an internal working wire **20**. On the other hand, in an alternative embodiment of the invention, each module **30** may internally contain more than one working wire **20**.

The shaft **10** may be mutually connected with the motor means **M** to rotate around the axis **X**, so as to rotate the wires **20** and to allow the same wires **20** to clean the areas **B**, **B'** on the edges of the rows **F, F'**.

When the head **1** is not in use, i.e. when the shaft **10** is stopped, the wires **20** due to their polymeric nature tend to assume a curvilinear form. When instead the head **1** is in use, i.e. when the shaft **10** rotates around the axis **X**, the wires **20** assume a substantially straight shape and tend to be arranged radially with respect to the axis **X.**

Advantageously, the working wires **20** may have a length sufficient to impact against the carter C to assume during use a substantially curvilinear configuration.

In this document, the words "in use" and derivative thereof indicates the operating condition of the weed-mower head during normal use to weed the edge areas of a surface along which the same weed-mower head advances.

Suitably, the set of the disc-shaped modules **30** may include, respectively may be consist of, one pair of end modules **300', 300"** and a plurality of central modules interposed therebetween, generally indicated by **310.**

Suitably, each module **30** may include a peripheral annular member **33** coaxial with the shaft **10** and coupled therewith to define with the same shaft **10** an annular air gap **35** for containing the respective working wires **20**.

Each peripheral annular member **33** may include at least one passing-through opening **36** for the passage of the working wire **20**. Preferably, each peripheral annular member **33** may include at least two passing-through holes **36** on opposite sides with respect to a median plane **π** substantially parallel to the axis **X** and passing therethrough.

The wire **20** may be wound peripherally to shaft **10**, preferably on a support coaxial therewith.

Each module **30** may further include retaining means **37** for retaining the working wire **20** which are located within the peripheral annular member **33**, which retaining means **37** may be integral with the shaft **10** to allow the user to wind/unwind the working wire **20** on/from the shaft **10** by rotation of the annular peripheral member **33**. In this way, the user can extend or replace the wire **20**, for example as a result of the breaking thereof.

Advantageously, the retaining means may include at least one seat **37'** susceptible to house the working wire **20** for retaining thereof upon the rotation of the peripheral annular member **33** by the user to wind/unwind the same working wire **20** on/from the shaft **10**.

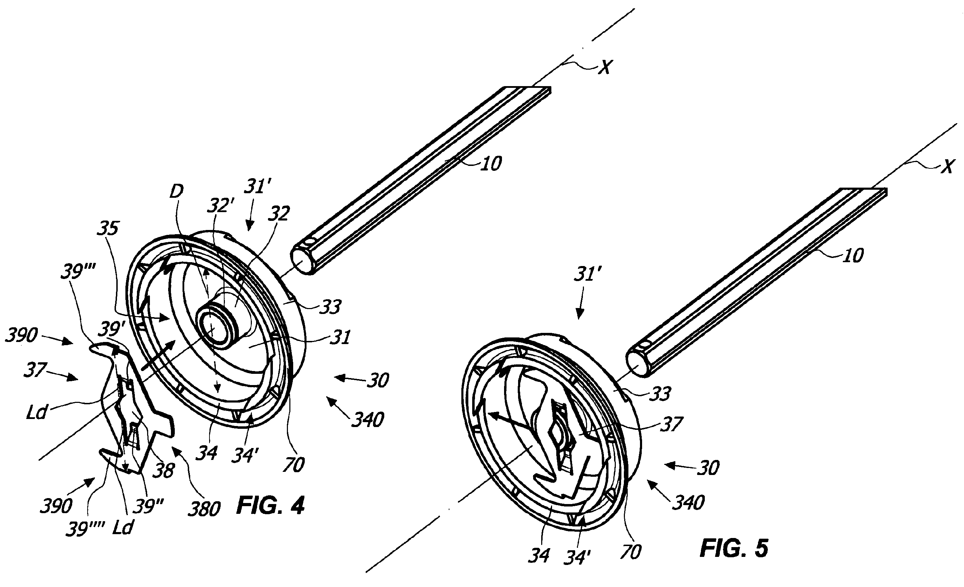

As particularly shown in figure 4, in a preferred but not exclusive embodiment, each module **30** may include a bottom wall **31** which is substantially flat and perpendicular to the axis **X,** a central hub **32** for coupling with the shaft **10** and the peripheral annular member **33**. Each module may further be open in correspondence of the free edge **34** of the annular peripheral member **33** opposite to the bottom wall **31**. In this embodiment the wire **20** may be wound around the central hub **32** of the reel **30**.

In order to allow the winding of the wire **20**, each module **30** is be rotatably supported idle by the shaft **10**, so that it is free to rotate with respect to the latter. To this end the shaft may have rounded edges, which shaft may have polygonal cross section, for example a hexagonal cross section.

In this embodiment, the retaining means of the wire **20** may include a plate-shaped element **37**. The latter may include a central aperture **38** having sufficient size to allow the passage of the shaft **10** but not of the hub **32**, against which the plate-shaped element **37** may abut.

To allow the retaining of the wire, the plate-shaped element **37** may be integral with the shaft **10** and rotatably coupled with the module **30**. In this way, it rotates with the shaft **10** when the latter rotates and may remain stationary when the same shaft **10** is stopped. In the latter position the module **30**, when disengaged from the other, may be free to rotate around the shaft **10** with respect to the same plate-shaped element **37**, which remains stationary with the shaft **10** when the latter is not in use.

To this end, the plate-shaped element **37** may comprise a central portion **380** that includes the central opening **38** and one pair of peripheral portions **390, 391** extending from the central portion **380** for operatively coupling with the peripheral annular member **33** so as to rotatably support it.

Advantageously, the central opening **38** may be at least partly suitably countershaped with respect to the shaft **10**. Further, peripherally to the central opening **38** the plate-shaped element **37** may include one pair of guide projections **39', 39"** susceptible to engage in an annular groove **32'** of the central hub **32** of each module **30**.

The plate-shaped element **37** may further have a maximum length Ld substantially equal to the inner diameter **D** of the reel **30**, and may include one pair of end projections **39"', 39"".** In this way the escaping of the wire **20** wound on the hub **32** over the plane defined by the plate-shaped element **37** is avoided.

Figures 4 to 7 shows a sequence of the mounting of a module **30** with its plate-shaped element **37** on the shaft **10**.

As shown in Figure 5, at first the insertion of the plate-shaped element **37** within the module **30** laterally to the central hub **32** is needed, so that the guide protrusions **39', 39"** remain in correspondence with the annular groove **32'**.

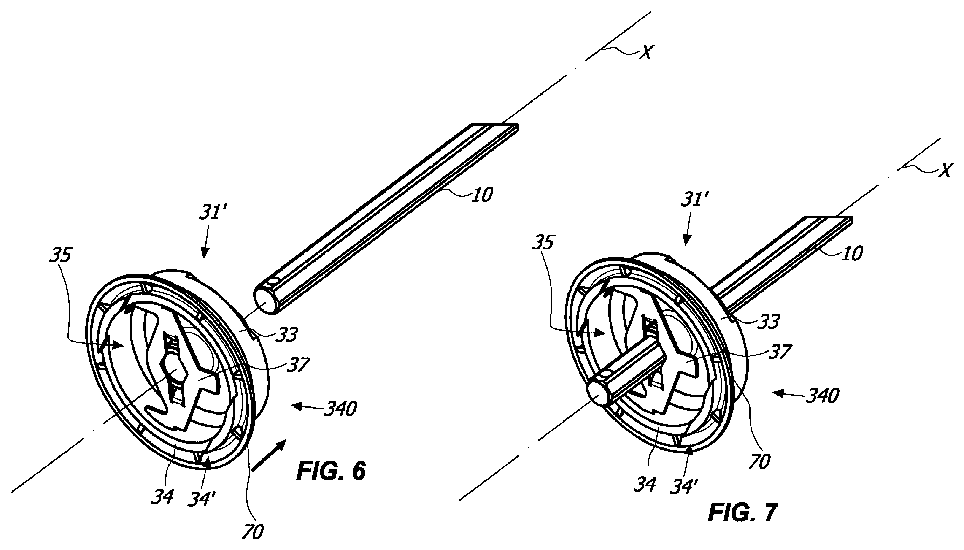

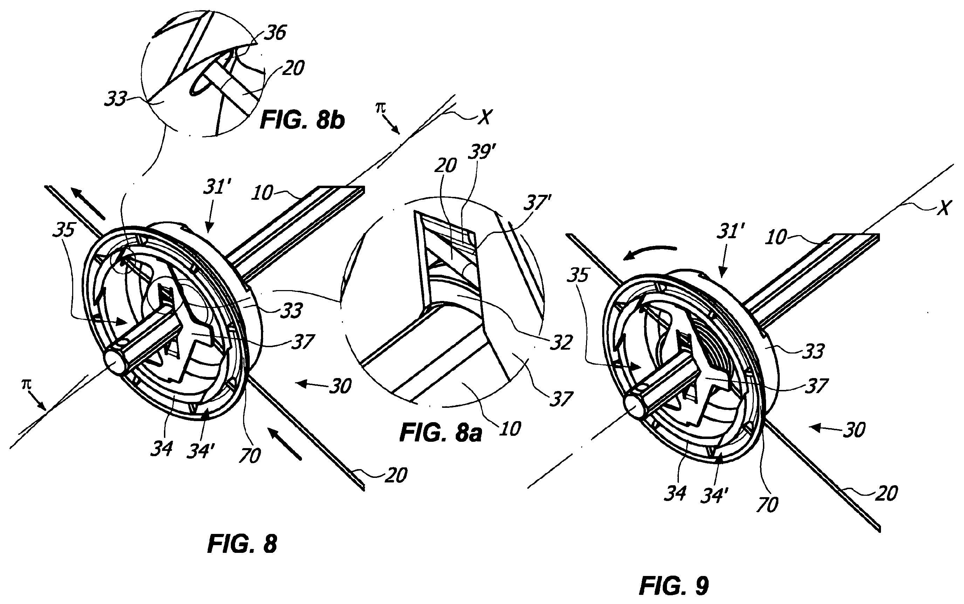

In order to insert the former guide protrusions **39', 39"** in the latter annular groove **32'**, it is necessary then slide laterally the plate-shaped element **37** to put the central opening **38** of the latter in correspondence with the central hub **32**, as shown in figure 6. In this way, the central hub **32** and the guide protrusions **39', 39"** cooperates to define one pair of passages **37'** for the wire **20**, as particularly shown in Figure 8a.

To complete the mounting, it is necessary to insert the whole assembly onto the shaft **10** through the central opening **38** and the central hub **32**, as shown in figure 7.

Figures 8 and 9 show a mounting sequence of the wire **20** on a module **30** with its plate-shaped element **37**.

At first the insertion of the wire **20** through one of the holes **36** is needed, then through one of the passages **37'** and then through the other of the holes **36**, as shown in Figure 8.

At this point, it is necessary to rotate the reel **30** around the shaft **10**, so as to wind the wire **20** on the central hub **32**, as shown in figure 9.

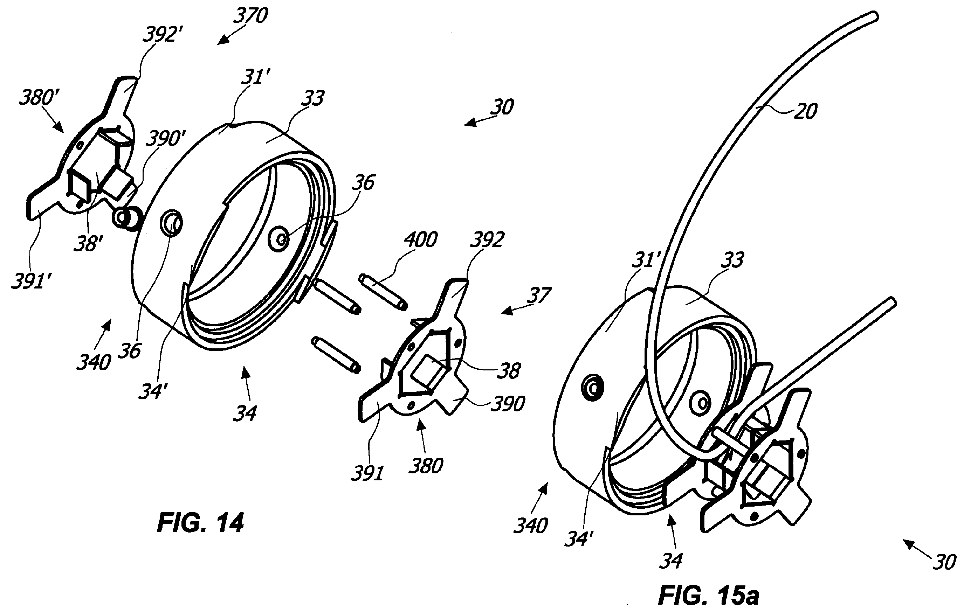

In a further preferred but not exclusive embodiment, shown in Figures 14 to 15c, the modules **30** may include the peripheral annular member **33** and may be free of the hub **32** and of the bottom wall **31**.

In this embodiment, the retaining means of the wire **20** may include one pair of plate-shaped elements **37, 370** each comprising a respective central portion **380, 380'** with a respective opening **38, 38'** and a respective plurality of peripheral portions **390, 390'; 391, 391'; 392, 392'** for rotatably supporting the peripheral annular member **33.**

Advantageously, the plate-shaped elements **37, 370** may be coupled together to define a container for containing the working wire **20.**

To this end, mutual connection means may be provided, for example a plurality of spacer elements **400** connected to the plate-shaped elements **37, 370** by means of riveting or appropriate screws. The spacer elements **400** define projections that protrude from the planes defined by the plate-shaped elements **37, 370.**

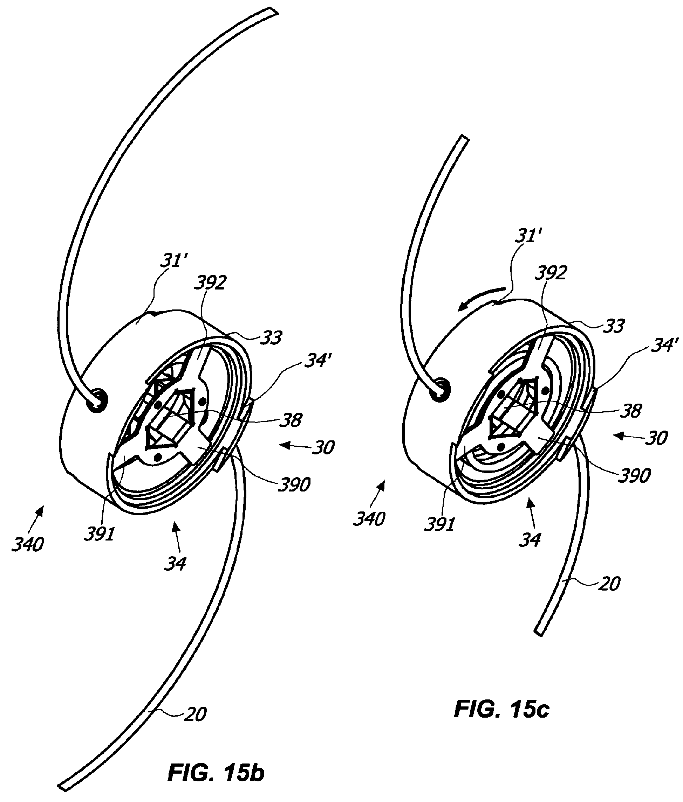

In this embodiment, the seat **37'** for the working wire **20** may be formed by the same spacer elements **400**, which face the shaft **10**. The working wire **20** may be inserted between the shaft **10** and the spacer elements **400**, as shown in FIG. 15a.

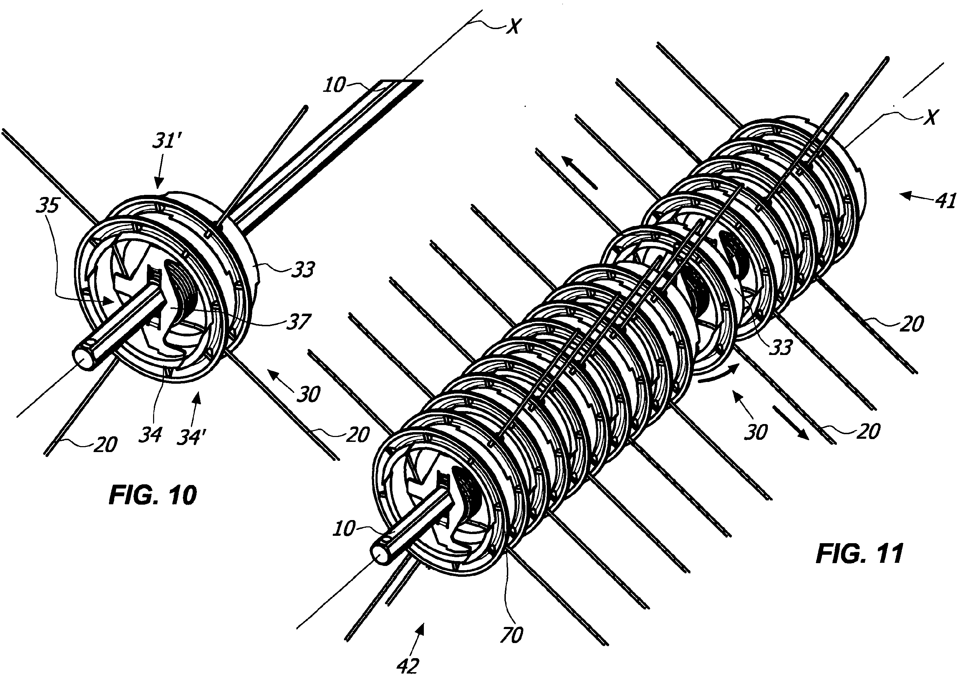

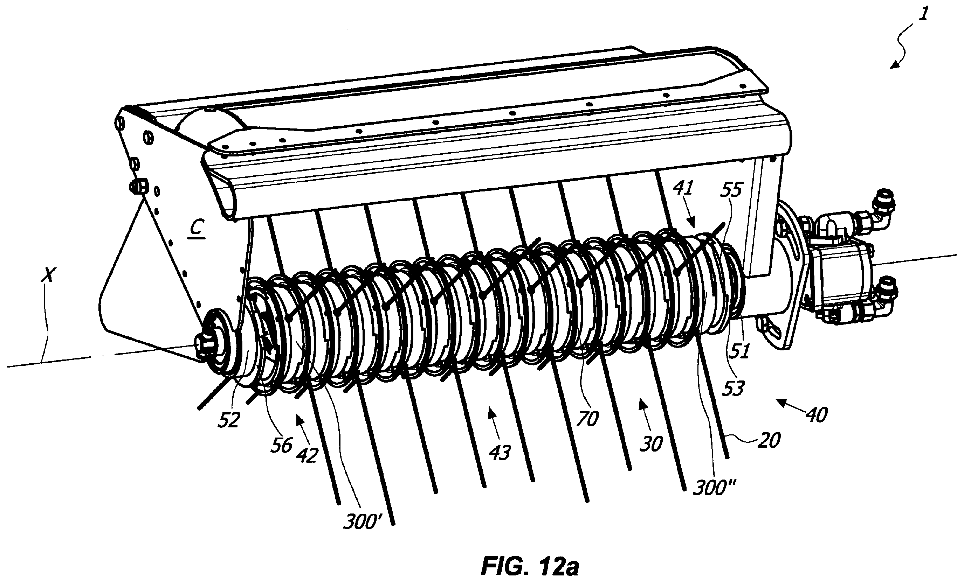

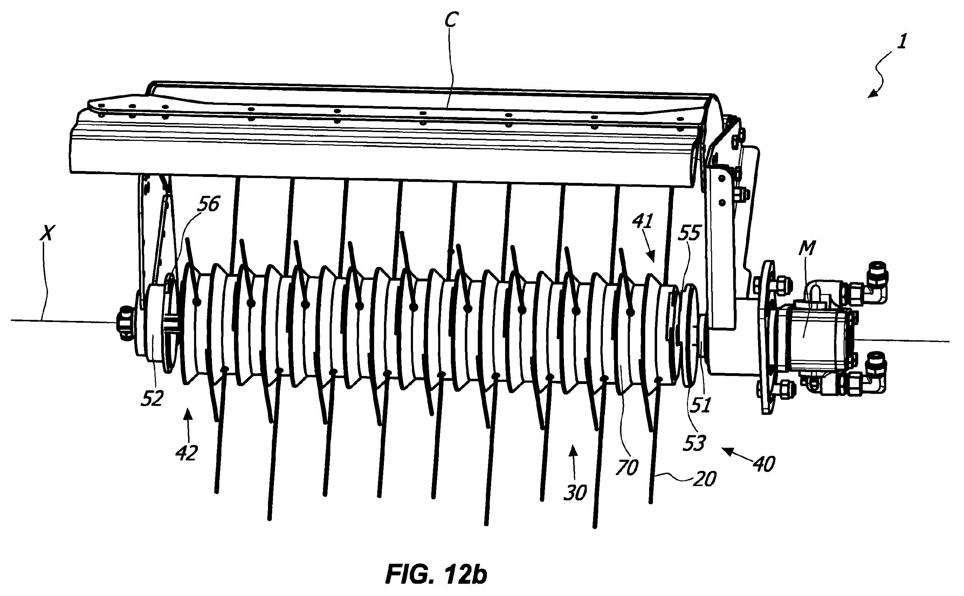

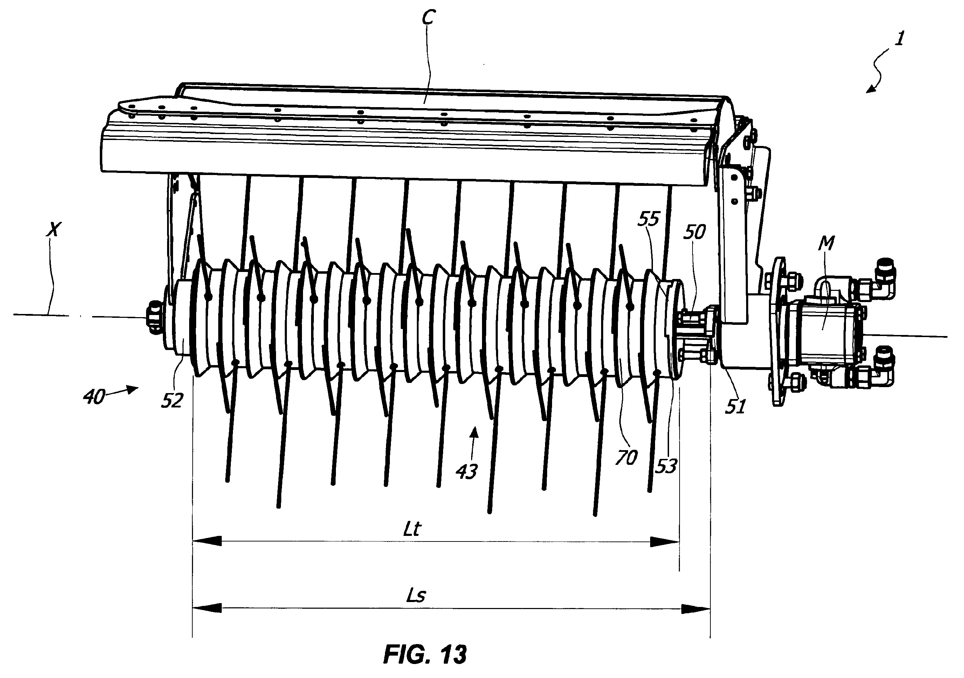

The disc-shaped modules **30**, placed side by side along the axis **X**, may be mutually engageable, as shown in figure 1, 12a, 12b and 13, and mutually disengageable, as particularly shown in figure 11.

In the mutually engaged configuration, the modules **30** form a substantially unitary tubular body **40** susceptible to rotate integrally with the shaft. To this end, suitable means for mutually coupling the tubular body **40** and the shaft **10** may be provided, a possible configuration of which will be disclosed in the following. In practice, the peripheral annular member **33** of each module **30** may define a portion of the substantially unitary tubular body **40**.

In the mutually disengaged configuration, the modules **30** may allow a user to selectively access to one of them to act on its working wire **20**, for example to elongate and/or to replace it in case of breakage.

In a preferred but not exclusive embodiment, the modules **30** may be slidable along the axis **X**. Moreover, the shaft **10** may have a length **Ls** greater than the one **Lt** of the tubular body **40** in order to allow a user to laterally slide the selected module **30**, so as to simplify the access thereto and leave it free to rotate idly on the shaft **10**.

In order to block the axial sliding of the modules **30** when mutually engaged to form the tubular body **40**, suitable blocking means may be provided, which blocking means may include for example one or more blocking pins **50** susceptible to be interposed between the same tubular body **40** and an abutment wall **51**.

The blocking pins **50** may act against a first disc-shaped plate **53** facing the abutment wall **51** to keep the modules **30** mutually engaged against a second disc-shaped plate **52**.

Suitably, the first disc-shaped plate **53** may be slidable along the axis **X**, while the second plate **52** may be fixed.

In order to mutually disengage the modules **30**, it is necessary at first to remove the blocking pins **50** from their operative position and then to move laterally the selected module **30** along the axis **X**, so as to access to the corresponding wire **20**.

To this end, as shown for example in Figure 11, it is necessary to move laterally the portions of the tubular body **40** on the right and on the left of the selected module **30**, to allow it to freely rotate about the axis **X.**

Once disengaged the selected module **30**, it is possible to pull the respective wire **20** to elongate it, as shown for example in Figure 11. This action will result in the rotation about the axis **X** of the module **30**.

On the other hand, once disengaged the selected module **30** it is possible to replace the respective wire **20**, for example because irreparably broken. In this case, it is necessary to reinsert a new wire **20** through the openings **36** and wind it peripherally to the shaft **10**, as shown in figures 8 and 9 or 15a to 15c.

Advantageously, the module selectively accessible by the user is one of the central modules **310**, respectively one of the end modules **300', 300"**.

The present invention allows maximum versatility of use of the weed-mower head 1, since the operator can vary the length of the tubular body **40** according to needs by varying the number of disc-shaped modules **30** on the shaft **10**. It is understood that in this case will correspondingly vary the length of the blocking pins **50**.

In order to further allow the integral rotation of the shaft **10** and the modules **30** mutually engaged to form the tubular body **40**, suitable coupling means may be provided which may include for example first shaped edges **55** and **56** respectively of the disc-shaped element **53** and the second fixed plate **52** mutually coupled with countershaped second edges **41** and **42** of the end modules **300", 300'**.

To allow the mutual engagement of the modules **30**, each of the latter may include first male and female-shaped engagement means **34'** formed in correspondence of a substantially circumferential edge **34** of the annular peripheral member **33** susceptible to engage with corresponding second male and female-shaped engagement means **31'** formed at the other substantially circumferential edge 340 of the annular peripheral member **33** of the module next **30.**

Advantageously, each module may include both the first male and female-shaped engagement means **34'** and the second male and female-shaped engagement means **31'**. The first and second male and female-shaped **34', 31'** may include for example a shaped surface with protrusions and recesses and a corresponding countershaped surface with recesses and protrusions.

In a preferred but not exclusive embodiment, the second countershaped end edges **42** and **41** of the tubular body **40** may coincide with the first and second male and female-shaped engagement means **34', 31'** of the end modules **300', 300".**

In a further preferred but not exclusive embodiment, the modules **30** may be engaged with each other and with the end plates **52, 53** simply by friction.

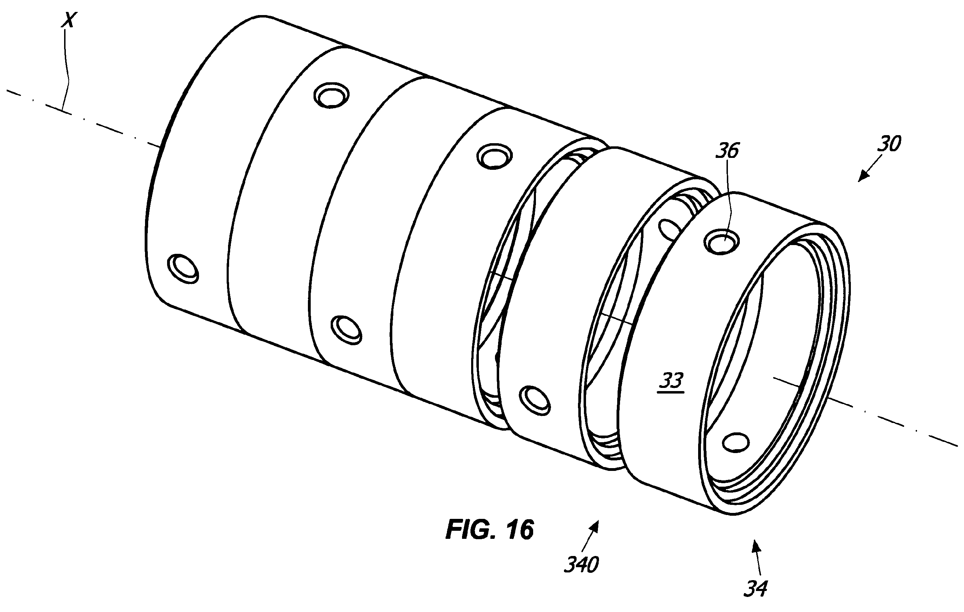

As shown in FIG. 16, the modules **30** may have the end edges **34, 340** free of the male and female-shaped engagement means **34', 31'**.

Moreover, the end plates **52, 53** and the end modules **300', 300"** may correspondingly be free respectively of the shaped edges **56, 55** and the countershaped edges **42, 41**.

Therefore, in this configuration the central modules **310** have their end edges **34, 340** mutually engaged with the corresponding end edges **34, 340** of the next and previous module.

Correspondingly, each of the end modules **300', 300"** may have one of the end edges **34, 340** mutually engaged with the respective end plate **52, 53** and the other of the end edges **34, 340** mutually engaged with the corresponding end edge **34, 340** of the previous or next module **30**.

Suitably, the tubular body **40**, respectively each module **30**, may include means of protection of the wires **20** which extend radially therefrom for impact against the obstacles of the rows **F, F'** during use and keep them spaced from the side surface **43** of the tubular body **40**, respectively from the annular peripheral member **33** of each module **30**, so as to avoid breakage of the wires **20** in correspondence of the same side surface **43**.

Advantageously, the protection means may include at least one annular expansion **70** that extends radially from the annular peripheral member **33** of each module **30** to protect the relative working wire **20**.

In view of the foregoing description, it is self-evident that the invention fulfils the intended objects.

In fact, thanks to the particular configuration of the weed-mower head 1 the operation of elongation and/or replacement of the wire **20** is extremely simple and quick. In fact, in case of breakage of the wire the user simply has to access to the selected reel by disengaging thereof from the others and to act on its wire.

Once replaced and/or elongated the wire, it is sufficient simply reengage each other the modules and make integral the tubular body thus formed with the shaft, in such a manner to restart the work.

It is apparent that in this way all the wires except the one to be replaced and/or to be elongated remain in position within the respective module and should not be remounted as in the solutions of the prior art.

This naturally makes the whole cleaning operation of the row of plants highly efficient and cost-effective, because the downtime in case of breakage of the working wire is minimal.

Thanks to the above features, it is further possible to mount on the weed-mower head a high number of working wires, so as to maximize the cleaning efficiency of the same operation.

Furthermore, the present invention allows the maximum versatility of use of the weed-mower head. In fact, it is possible to increase or decrease the length of the tubular body, i.e. in practice to increase or decrease the number of wires, according to needs.

To this end, it is sufficient to increase or decrease the number of modules on the shaft. For this reason, in a further aspect the present invention further relates to the single module formed by the reel and possibly by the wire included therein.

The use of the weed-mower head 1 for cleaning rows of plants allows to completely avoiding the use of chemical herbicides, thus reducing the environmental impact of this operation.

The invention is susceptible to many changes and variants, all falling within the inventive concept expressed in the annexed claims.

## Claims

1. A weed-mower head applicable to a vehicle (**V**) for weeding the areas (**B, B'**) on the edges of a forwarding surface (**R**) thereof, the weed-mower head being to be used with motor means (**M**), the weed-mower head comprising:
- a support shaft (**10**) defining a longitudinal axis (**X**), the shaft (**10**) being mutually connectable with the motor means (**M**) to rotate about said axis (**X**);
- a plurality of working wires (**20**) which are susceptible to be radially arranged with respect to said axis (**X**) upon rotation of said shaft (**10**);
- a set of disc-shaped modules (**30**) coaxially coupled with said shaft (**10**) and side-by-side flanking each other along said axis (**X**), each module (**30**) of said set internally including at least one of said working wires (**20**), said set of disc-shaped modules (**30**) including one pair of end modules (**300', 300"**) and a plurality of central modules (**310**) interposed therebetween;
wherein said end modules (**300', 300"**) and said central modules (**310**) are mutually engageable to form a substantially unitary tubular body (**40**) susceptible to integrally rotating with said shaft (**10**), said end modules (**300', 300"**) and said central modules (**310**) being mutually disengageable to allow a user to selectively access to one thereof to act on the corresponding at least one working wire (**20**);
**characterized in that** said modules (**30**) of said set are rotatably supported idle by said shaft (**10**) so that each one is free to rotate with respect to the latter and vice-versa.

2. Weed-mower head according to claim 1, wherein said module selectively accessible by the user is one of said central modules (**310**), respectively one of said end modules **(300', 300"**).

3. Weed-mower head according to claim 1 or 2, further comprising reciprocal coupling means (**52, 53, 55, 56, 41, 42**) between the modules (**30**) of said set and said shaft (**10**) to allow the integral rotation thereof, said coupling means (**52, 53, 55, 56, 41, 42**) being of the removable type to allow the free rotation of the modules (**30**) of said set with respect to said shaft (**10**) upon the selective access to said one thereof by the user to act on the corresponding at least one working wire (**20**).

4. Weed-mower head according to the preceding claim, wherein said removable mutual coupling means (**52, 53, 55, 56, 41, 42**) comprise one pair of respective end plates (**52, 53**) rotating integrally with said shaft (**10**), each of said end plates (**52, 53**) being mutually engaged with a respective end module (**300', 300"**) of said set.

5. Weed-mower head according to the preceding claim, wherein each of said end plates (**52, 53**) includes respective shaped edges (**56, 55**) mutually couplable with/decouplable from a respective countershaped edge (**42, 41**) of the respective end module (**300', 300"**) of said set.

6. Weed-mower head according to claim 4 or 5, wherein one of said end plates (**52**) is slidably fixed with respect to said shaft (**10**), the other of said end plates (**53**) is slidable with respect to said shaft (**10**), said at least one blocking pin (**50**) remaining interposed between said abutment wall (**51**) and the sliding one of said end plates (**53**) to maintain the modules (**30**) of said set mutually blocked against the fixed one of said end plates (**52**).

7. Weed-mower head according to one or more of the preceding claims, wherein each module (**30**) of said set includes at least one peripheral annular member (**33**) susceptible to define a portion of said tubular body (**40**), said at least one peripheral annular member (**33**) being coaxial to said shaft (**10**) and coupled therewith (**10**) to define with the same shaft (**10**) an annular air gap (**35**) to contain said at least one of said working wires (**20**), said at least one peripheral annular member (**33**) including at least one passing-through opening (**36**) for the passage of said at least one of said working wires (**20**), the latter being windable peripherally to said shaft (**10**), each module (**30**) further including within said at least one peripheral annular member (**33**) retaining means (**37**) for retaining said at least one of said working wires (**20**), said retaining means (**37**) being integral with the shaft (**10**) to allow the user upon selective access to said one of said modules (**30**) to wind/unwind said at least one of said working wires (**20**) on/from said shaft (**10**) by rotation of said at least one peripheral annular member (**33**).

8. Weed-mower head according to the preceding claim, wherein said at least one peripheral annular member (**33**) of each module (**30**) includes at least two passing-through holes (**36**) on opposite sides with respect to a median plane (**n**) substantially parallel to said axis (**X**) and passing therethrough.

9. Weed-mower head according to claim 7 or 8, wherein said retaining means include at least one seat (**37'**) susceptible to house said at least one of said working wires (**20**) for retaining thereof upon the rotation of said at least one peripheral annular member (**33**) by the user to wind/unwind the same at least one of said working wires (**20**) on/from said shaft (**10**).

10. Weed-mower head according to claim 7, 8 or 9, wherein said retaining means include at least one plate-shaped element (**37**) with a central opening (**38**) having a sufficient size to allow the passage of the shaft (**10**) and being preferably at least partly countershaped with respect to the same shaft (**10**).

11. Weed-mower head according to the preceding claim, wherein said at least one plate-shaped element (**37**) includes at least one projection (**39', 400**) facing said shaft (**10**) to define therewith said at least one seat (**37'**) for retaining said at least one of said working wires (**20**).

12. Weed-mower head according to claim 10 or 11, wherein said at least one plate-shaped element (**37**) includes means for rotatably supporting said at least one peripheral annular member (**33**).

13. Weed-mower head according to one or more of the preceding claims, wherein each of said modules (**30**) includes a central hub (**32**) for coupling with said shaft (**10**) and a substantially flat bottom wall (**31**) perpendicular to said axis (**X**) for connecting said hub (**32**) and said at least one peripheral annular member (**33**), each module (**30**) being open at the free edge (**34**) of said at least one peripheral annular member (**33**) opposite to said bottom wall (**31**), said retaining means including a single plate-shaped element (**37**) having a central opening (**38**) of sufficient size to allow the passage of the shaft (**10**) and to prevent the passage of the central hub (**32**) so that the plate-shaped element (**37**) abuts against the latter, the central opening (**38**) being at least partially countershaped with respect to said shaft (**10**), the plate-shaped element (**37**) including one pair of guide protrusions (**39', 39"**) susceptible to rotatably engage in an annular groove (**32'**) of the central hub (**32**) of each module (**30**) to define with the latter one pair of seats (**37'**) for retaining said at least one of said working wires (**20**).

14. Weed-mower head according to one or more of the preceding claims, wherein one of said end modules (**300', 300"**) includes one of said first (**34'**) and said second (**31'**) male and female-shaped engagement means which consists of one of said countershaped edges (**42, 41**) mutually couplable with/decouplable from one of said shaped edges (**56, 55**) of one of said end plates (**52, 53**), the other of said end modules (**300', 300**") including one of said first (**34'**) and said second (**31'**) male and female-shaped engagement means which consists of the other of said countershaped edges (**42, 41**) mutually couplable with/decouplable from the other of said shaped edges (**56, 55**) of the other of said end plates (**52, 53**).

15. A weed-mower apparatus for cleaning rows of plants (**F, F'**) comprising a support structure connectable to an agricultural vehicle (**V**) of the type tractor or the like, the support structure including:
- a protective case (**C**);
- motor means (**M**);
- a weed-mower head (**1**) according to one or more of the preceding claims connected to said motor means (**M**);
wherein the weed-mower head (**1**) is pivoted on the support structure to rotate about an axis (**Z**) upon the impact against an obstacle (**F, F'**) from a first predetermined working position to a second rotated working position, elastic counteracting means (**S**) being provided for returning the weed-mower head (**1**) in the operative position upon the impact from said second rotated working position to said first predetermined working position.

## Patentansprüche

1. Unkrautmähmaschinenkopf, der auf ein Fahrzeug (V) zum Beseitigen von Unkraut auf Bereichen (B, B') an den Kanten einer vorderen Oberfläche (R) davon anwendbar ist, wobei der Unkrautmähmaschinenkopf mit Motormitteln (M) benutzt wird, der Unkrautmähmaschinenkopf umfassend:
- eine Stützwelle (10), die eine Längsachse (X) definiert, wobei die Welle (10) wechselseitig mit dem Motormittel (M) zum Drehen um die Achse (X) verbindbar ist;
- mehrere Arbeitsdrähte (20), die dazu geeignet sind, radial bezüglich der Achse (X) nach Drehung der Welle (10) angeordnet zu sein;
- einen Satz scheibenförmiger Module (30), die koaxial mit der Welle (10) verkuppelt sind und einander entlang der Achse (X) nebeneinander flankieren, wobei jedes Modul (30) des Satzes zumindest einen der Arbeitsdrähte (20) enthält, wobei der Satz scheibenförmiger Module (30) ein Paar Endmodule (300', 300 ") und mehrere zentrale Module (310) enthält, die dazwischen eingeschoben sind;
wobei die Endmodule (300', 300 ") und die zentralen Module (310) zum Ausbilden eines im Wesentlichen einheitlichen rohrförmigen Körpers (40) wechselseitig in Eingriff bringbar sind, welcher dazu geeignet ist, einstückig mit der Welle (10) zu drehen, wobei die Endmodule (300', 300") und die zentralen Module (310) wechselseitig voneinander lösbar sind, um es einem Benutzer zu ermöglichen, selektiv auf eines davon zuzugreifen, um auf den entsprechenden, zumindest einen Arbeitsdraht (20) einzuwirken;
**dadurch gekennzeichnet, dass** die Module (30) des Satzes leerlaufend drehbar durch die Welle (10) gestützt sind, sodass jedes bezüglich der letzteren frei zu drehen ist und umgekehrt.

2. Unkrautmähmaschinenkopf nach Anspruch 1, wobei das Modul, das selektiv für den Benutzer zugänglich ist, eines der zentralen Module (310) bzw. eines der Endmodule (300', 300") ist.

3. Unkrautmähmaschinenkopf nach einem der Ansprüche 1 oder 2, ferner umfassend reziproke Kupplungsmittel (52, 53, 55, 56, 41, 42) zwischen den Modulen (30) des Satzes und der Welle (10), um einstückige Drehung davon zu ermöglichen, wobei die Kupplungsmittel (52, 53, 55, 56, 41, 42) von der abnehmbaren Art sind, um freie Drehung der Module (30) des Satzes bezüglich der Welle (10) nach dem selektiven Zugriff durch den Benutzer auf eines davon zum Einwirken auf den entsprechenden zumindest einen Arbeitsdraht (20) zu ermöglichen.

4. Unkrautmähmaschinenkopf nach dem vorhergehenden Anspruch, wobei die abnehmbaren, wechselseitigen Kupplungsmittel (52, 53, 55, 56, 41, 42) ein Paar jeweiliger Endplatten (52, 53) umfasst, die einstückig mit der Welle (10) drehen, wobei jede der Endplatten (52, 53) wechselseitig mit einem jeweiligen Endmodul (300', 300 ") des Satzes in Eingriff stehen.

5. Unkrautmähmaschinenkopf nach dem vorhergehenden Anspruch, wobei jede der Endplatten (52, 53) jeweilige geformte Kanten (56, 55) enthält, die wechselseitig an eine jeweilige gegenförmige Kante (42, 41) des jeweiligen Endmoduls (300', 300") des Satzes kuppelbar oder davon entkuppelbar sind.

6. Unkrautmähmaschinenkopf nach einem der Ansprüche 4 oder 5, wobei eine der Endplatten (52) bezüglich der Welle (10) gleitbar befestigt ist, wobei die andere der Endplatten (53) bezüglich der Welle (10) gleitbar ist, wobei der zumindest eine Sperrstift (50) zwischen der Angrenzungswand (51) und der gleitbaren der Endplatten (53) eingeschoben bleibt, um die Module (30) des Satzes wechselseitig an der befestigten der Endplatten (52) gesperrt zu erhalten.

7. Unkrautmähmaschinenkopf nach einem der vorhergehenden Ansprüche, wobei jedes Modul (30) des Satzes zumindest ein umfängliches ringförmiges Glied (33) enthält, das zum Definieren eines Abschnitts des rohrförmigen Körpers (40) geeignet ist, wobei das zumindest eine umfängliche ringförmige Glied (33) koaxial zur Welle (10) ist und damit (10) verkuppelt ist, um mit derselben Welle (10) einen ringförmigen Luftspalt (35) zum Enthalten des zumindest einen der Arbeitsdrähte (20) zu definieren, wobei das zumindest eine umfängliche ringförmige Glied (33) zumindest eine Durchgangsöffnung (36) für den Durchgang des zumindest einen der Arbeitsdrähte (20) enthält, wobei der letztere umfänglich zur Welle (10) aufwickelbar ist, wobei jedes Modul (30) ferner innerhalb des zumindest einen umfänglichen ringförmigen Glieds (33) Halteglieder (37) zum Halten des zumindest einen der Arbeitsdrähte (20) enthält, wobei die Halteglieder (37) mit der Welle (10) einstückig sind, um es dem Benutzer zu ermöglichen, nach dem selektiven Zugriff auf das eine der Module (30) den zumindest einen der Arbeitsdrähte (20) durch Drehung des zumindest einen umfänglichen ringförmigen Glieds (33) auf die Welle (10) aufzuwickeln bzw. davon abzuwickeln.

8. Unkrautmähmaschinenkopf nach dem vorhergehenden Anspruch, wobei das zumindest eine umfängliche ringförmige Glied (33) jedes Moduls (30) zumindest zwei Durchgangslöcher (36) auf gegenüberliegenden Seiten bezüglich einer Medianebene (n) im Wesentlichen parallel zur Achse (X) und dort hindurch laufend enthält.

9. Unkrautmähmaschinenkopf nach einem der Ansprüche 7 oder 8, wobei die Haltemittel zumindest einen Sitz (37') enthalten, der zum Unterbringen des zumindest einen der Arbeitsdrähte (20) zum Halten desselben nach der Drehung des zumindest einen umfänglichen ringförmigen Glieds (33) durch den Benutzer zum Aufwickeln/Abwickeln desselben zumindest einen der Arbeitsdrähte (20) auf die/von der Welle (10) geeignet ist.

10. Unkrautmähmaschinenkopf nach einem der Ansprüche 7, 8 oder 9, wobei die Haltemittel zumindest ein plattenförmiges Element (37) mit einer mittigen Öffnung (38) enthalten, die eine genügende Größe aufweist, um den Durchgang der Welle (10) zu ermöglichen, und vorzugsweise zumindest teilweise bezüglich derselben Welle (10) gegenförmig ist.

11. Unkrautmähmaschinenkopf nach dem vorhergehenden Anspruch, wobei das zumindest eine plattenförmige Element (37) zumindest einen Vorsprung (39', 400), der der Welle (10) zugekehrt ist, enthält, um damit den zumindest einen Sitz (37') zum Halten des zumindest einen der Arbeitsdrähte (20) zu definieren.

12. Unkrautmähmaschinenkopf nach einem der Ansprüche 10 oder 11, wobei das zumindest eine plattenförmige Element (37) Mittel zum drehbaren Stützen des zumindest einen umfänglichen ringförmigen Glieds (33) enthält.

13. Unkrautmähmaschinenkopf nach einem der vorhergehenden Ansprüche, wobei jedes der Module (30) eine zentrale Nabe (32) zum Verkuppeln mit der Welle (10) und eine im Wesentlichen flache Bodenwand (31) senkrechtstehend zur Achse (X) zum Verbinden der Nabe (32) und des zumindest einen umfänglichen ringförmigen Glieds (33) enthält, wobei jedes Modul (30) an der freien Kante (34) des zumindest einen umfänglichen ringförmigen Glieds (33) gegenüber der Bodenwand (31) offen ist, wobei die Haltemittel ein einzelnes plattenförmiges Element (37) mit einer genügenden Größe enthalten, um den Durchgang der Welle (10) zu ermöglichen und den Durchgang der zentralen Nabe (32) zu verhindern, sodass das plattenförmige Element (37) an die letztere angrenzt, wobei die zentrale Öffnung (38) zumindest teilweise bezüglich der Welle (10) gegenförmig ist, wobei das plattenförmige Element (37) ein Paar Führungsvorsprünge (39', 39") enthält, die zum drehbaren Eingreifen in eine ringförmige Nut (32') der zentralen Nabe (32) jedes Moduls (30) geeignet sind, um mit der letzteren ein Paar Sitze (37') zum Halten des zumindest einen der Arbeitsdrähte (20) zu definieren.

14. Unkrautmähmaschinenkopf nach einem der vorhergehenden Ansprüche, wobei eines der Endmodule (300', 300 ") eines des ersten (34') und zweiten (31') männlichen und weiblichen Eingriffsmittels enthält, das aus einer der gegenförmigen Kanten (42, 41) besteht, die wechselseitig mit einer der geformten Kanten (56, 55) von einer der Endplatten (52, 53) verkuppelbar bzw. davon entkuppelbar sind, wobei das andere der Endmodule (300', 300") eines des ersten (34') und zweiten (31') männlichen und weiblichen Eingriffsmittels enthält, das aus der anderen der gegenförmigen Kanten (42, 41) besteht, die wechselseitig mit einer der geformten Kanten (56, 55) von einer der Endplatten (52, 53) verkuppelbar bzw. davon entkuppelbar sind.

15. Unkrautmähmaschinenvorrichtung zum Säubern von Reihen von Pflanzen (F, F'), umfassend eine Stützstruktur, die mit einem landwirtschaftlichen Fahrzeug (V) der Traktorart oder dergleichen verbindbar ist, wobei die Stützstruktur Folgendes enthält:
- ein Schutzgehäuse (C);
- Motormittel (M);
- einen Unkrautmähmaschinenkopf (1) nach einem der vorhergehenden Ansprüche, der mit dem Motormittel (M) verbunden ist;
wobei der Unkrautmähmaschinenkopf (1) an der Stützstruktur zum Drehen um eine Achse (Z) auf das Auftreffen auf ein Hindernis (F, F') hin aus einer ersten vorgegebenen Arbeitsposition in eine zweite Arbeitsposition angelenkt ist, wobei elastische Gegenwirkungsmittel (S) zum Zurückbringen des Unkrautmähmaschinenkopfs (1) in die Betriebsposition auf das Auftreffen hin aus der zweiten, gedrehten Arbeitsposition in die erste, vorgegebene Arbeitsposition vorgesehen sind.

## Revendications

1. Tête de désherbage applicable à un véhicule (V) permettant de désherber les zones (B, B') situées sur les bords d'une surface de transfert (R) de celle-ci, la tête de désherbage devant être utilisée avec des moyens moteurs (M), la tête de désherbage comprenant :
- un arbre de support (10) définissant un axe longitudinal (X), l'arbre (10) étant connectable mutuellement avec les moyens moteurs (M) pour tourner autour dudit axe (X) ;
- une pluralité de fils de travail (20) qui sont susceptibles d'être disposés de manière radiale par rapport audit axe (X) lors de la rotation dudit arbre (10) ;
- un ensemble de modules en forme de disque (30) couplés de manière coaxiale avec ledit arbre (10) et se flanquant côte à côte les uns les autres le long dudit axe (X), chaque module (30) dudit ensemble comprenant intérieurement au moins l'un desdits fils de travail (20), ledit ensemble de modules en forme de disque (30) comprenant une paire de modules d'extrémité (300', 300") et une pluralité de modules centraux (310) interposés entre eux ;
dans laquelle lesdits modules d'extrémité (300', 300") et lesdits modules centraux (310) peuvent s'engager mutuellement pour former un corps tubulaire sensiblement unitaire (40) susceptible de tourner intégralement avec ledit arbre (10), lesdits modules d'extrémité (300', 300") et lesdits modules centraux (310) pouvant se désengager mutuellement pour permettre à un utilisateur d'accéder de manière sélective à l'un d'eux en vue d'agir sur l'au moins un fil de travail correspondant (20) ;
**caractérisée en ce que** lesdits modules (30) dudit ensemble sont supportés de manière rotative au repos par ledit arbre (10) de sorte que chacun est libre de tourner par rapport à l'autre et vice-versa.

2. Tête de désherbage selon la revendication 1, dans laquelle ledit module accessible de manière sélective par l'utilisateur est l'un desdits module centraux (310), respectivement l'un desdits modules d'extrémité (300', 300").

3. Tête de désherbage selon la revendication 1 ou 2, comprenant en outre des moyens de couplage réciproques (52, 53, 55, 56, 41, 42) entre les modules (30) dudit ensemble et dudit arbre (10) pour permettre la rotation intégrale de ceux-ci, lesdits moyens de couplage (52, 53, 55, 56, 41, 42) étant du type amovible pour permettre la rotation libre des modules (30) dudit ensemble par rapport audit arbre (10) lors de l'accès sélectif à l'un de ceux-ci par l'utilisateur pour agir sur l'au moins un fil de travail correspondant (20).

4. Tête de désherbage selon la revendication précédente, dans laquelle lesdits moyens de couplage mutuels amovibles (52, 53, 55, 56, 41, 42) comprennent une paire de plaques d'extrémité respectives (52, 53) tournant intégralement avec ledit arbre (10), chacune desdites plaques d'extrémité (52, 53) étant mutuellement engagé avec un module d'extrémité respectif (300', 300") dudit ensemble.

5. Tête de désherbage selon la revendication précédente, dans laquelle chacune desdites plaques d'extrémité (52, 53) comprend des bords formés (56, 55) respectifs pouvant être couplés mutuellement avec/découplés d'un bord contre-formé (42, 41) respectif du module d'extrémité respectif (300', 300") dudit ensemble.

6. Tête de désherbage selon la revendication 4 ou 5, dans laquelle l'une desdites plaques d'extrémité (52) est fixée de manière coulissante par rapport audit arbre (10), l'autre desdites plaques d'extrémité (53) est coulissante par rapport audit arbre (10), ladite au moins une tige de blocage (50) restant interposée entre ladite paroi de butée (51) et celle desdites plaques d'extrémité (53) qui coulisse afin de maintenir les modules (30) dudit ensemble bloqué mutuellement contre celle desdites plaques d'extrémité (52) qui est fixe.

7. Tête de désherbage selon une ou plusieurs des revendications précédentes, dans laquelle chaque module (30) dudit ensemble comprend au moins un élément annulaire périphérique (33) susceptible de définir une partie dudit corps tubulaire (40), ledit au moins un élément annulaire périphérique (33) étant coaxial audit arbre (10) et couplé à celui-ci (10) pour définir avec le même arbre (10) un espace d'air annulaire (35) afin de contenir ledit au moins un desdits fils de travail (20), ledit au moins un élément annulaire périphérique (33) comprenant au moins une ouverture traversante (36) pour le passage dudit au moins un desdits fils de travail (20), ce dernier étant enroulable de manière périphérique sur ledit arbre (10), chaque module (30) comprenant en outre à l'intérieur dudit au moins un élément annulaire périphérique (33) des moyens de retenue (37) permettant de retenir ledit au moins un desdits fils de travail (20), lesdits moyens de retenue (37) faisant partie intégrante de l'arbre (10) pour permettre à l'utilisateur lors d'un accès sélectif dudit un desdits modules (30) d'enrouler/désenrouler ledit au moins un desdits fils de travail (20) sur/à partir dudit arbre (10) par rotation dudit au moins un élément annulaire périphérique (33).

8. Tête de désherbage selon la revendication précédente, dans laquelle ledit au moins un élément annulaire périphérique (33) de chaque module (30) comprend au moins deux trous traversants (36) sur des côtés opposés par rapport à un plan médian (n) sensiblement parallèle audit axe (X) et passant à travers.

9. Tête de désherbage selon la revendication 7 ou 8, dans laquelle lesdits moyens de retenue comprennent au moins un siège (37') susceptible de loger ledit au moins un desdits fils de travail (20) permettant la retenue de celui-ci lors de la rotation dudit au moins un élément annulaire périphérique (33) par l'utilisateur en vue d'enrouler/désenrouler le même au moins un desdits fils de travail (20) sur/à partir dudit arbre (10).

10. Tête de désherbage selon la revendication 7, 8 ou 9, dans laquelle lesdits moyens de retenue comprennent au moins un élément en forme de plaque (37) avec une ouverture centrale (38) ayant une taille suffisante pour permettre le passage de l'arbre (10) et étant de préférence au moins en partie contre-formé par rapport au même arbre (10).

11. Tête de désherbage selon la revendication précédente, dans laquelle ledit au moins un élément en forme de plaque (37) comprend au moins une projection (39', 400) faisant face audit arbre (10) pour définir avec celui-ci ledit au moins un siège (37') pour la retenue dudit au moins un desdits fils de travail (20).

12. Tête de désherbage selon la revendication 10 ou 11, dans laquelle ledit au moins un élément en forme de plaque (37) comprend des moyens permettant de supporter de manière rotative ledit au moins un élément annulaire périphérique (33).

13. Tête de désherbage selon une ou plusieurs des revendications précédentes, dans laquelle chacun desdits modules (30) comprend un moyeu central (32) pour le couplage avec ledit arbre (10) et une paroi inférieure sensiblement plate (31) perpendiculaire audit axe (X) permettant de connecter ledit moyeu (32) et ledit au moins un élément annulaire périphérique (33), chaque module (30) étant ouvert au niveau du bord libre (34) dudit au moins un élément annulaire périphérique (33) opposé à ladite paroi inférieure (31), lesdits moyens de retenue comprenant un seul élément en forme de plaque (37) comprenant une ouverture centrale (38) d'une taille suffisante pour permettre le passage de l'arbre (10) et pour empêcher le passage du moyeu central (32) de sorte que l'élément en forme de plaque (37) vient en butée contre ce dernier, l'ouverture centrale (38) étant au moins en partie contre-formée par rapport audit arbre (10), l'élément en forme de plaque (37) comprenant une paire de saillies de guidage (39', 39") susceptible de s'engager de manière rotative dans une rainure annulaire (32') du moyeu central (32) de chaque module (30) pour définir avec ce dernier une paire de sièges (37') permettant de retenir ledit au moins un desdits fils de travail (20).

14. Tête de désherbage selon une ou plusieurs des revendications précédentes, dans laquelle un desdits modules d'extrémité (300', 300") comprend l'un dudit premier (34') et dudit second (31') moyen d'engagement de forme mâle et femelle qui se compose de l'un desdits bords contre-formés (42, 41) pouvant être couplés mutuellement avec/découplés de l'un desdits bords formés (56, 55) de l'une desdites plaques d'extrémité (52, 53), l'autre desdits modules d'extrémité (300', 300") comprenant l'un dudit premier (34') et dudit second (31') moyen d'engagement de forme mâle et femelle qui se compose de l'autre desdits bords contre-formés (42, 41) pouvant être couplés mutuellement avec/découplés de l'autre desdits bords formés (56, 55) de l'autre desdites plaques d'extrémité (52, 53).

15. Appareil de désherbage permettant de nettoyer des rangées de plantes (F, F') comprenant une structure de support pouvant être connectée à un véhicule agricole (V) du type tracteur ou similaire, la structure de support comprenant :
- un boîtier de protection (C) ;
- des moyens moteurs (M) ;
- une tête de désherbage (1) selon une ou plusieurs des revendications précédentes connectée auxdits moyens moteurs (M) ;
dans lequel la tête de désherbage (1) pivote sur la structure de support pour tourner autour d'un axe (Z) lors de l'impact contre un obstacle (F, F') à partir d'une première position de travail prédéterminée à une seconde position de travail tournée, des moyens élastiques de réaction (S) étant prévus pour remettre la tête de désherbage (1) en position de fonctionnement lors de l'impact à partir de ladite seconde position de travail tournée à ladite première position de travail prédéterminée.
